(19) **Europäisches Patentamt / European Patent Office / Office européen des brevets**

(11) **EP 3 726 494 B1**

(12) **FASCICULE DE BREVET EUROPEEN**

(45) Date de publication et mention de la délivrance du brevet:
**12.07.2023 Bulletin 2023/28**

(21) Numéro de dépôt: **20170102.6**

(22) Date de dépôt: **17.04.2020**

(51) Classification Internationale des Brevets (IPC):
*G08G 1/01* (2006.01)    *B60W 30/00* (2006.01)
*B60W 50/00* (2006.01)    *G05D 1/02* (2020.01)
*G08G 1/04* (2006.01)    *G08G 1/0967* (2006.01)
*H04W 4/02* (2018.01)

(52) Classification Coopérative des Brevets (CPC):
**G08G 1/0116; G08G 1/0133; G08G 1/0141; G08G 1/04; G08G 1/096725; G08G 1/096741; G08G 1/09675; G08G 1/096775; H04W 4/02**

(54) **PROCÉDÉ D'ASSISTANCE À LA CONDUITE DE VÉHICULES, PROGRAMME D'ORDINATEUR ET SYSTÈME ASSOCIÉS**

FAHRERASSISTENZVERFAHREN ZUM FÜHREN VON FAHRZEUGEN, ENTSPRECHENDES COMPUTERPROGRAMM UND SYSTEM

METHOD FOR ASSISTING WITH THE DRIVING OF VEHICLES, ASSOCIATED COMPUTER PROGRAM AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.04.2019 FR 1904167**

(43) Date de publication de la demande:
**21.10.2020 Bulletin 2020/43**

(73) Titulaire: **TRANSDEV GROUP INNOVATION
92130 Issy-les-Moulineaux (FR)**

(72) Inventeur: **KARAOGUZ, Cem
78280 Guyancourt (FR)**

(74) Mandataire: **Lavoix
2, place d'Estienne d'Orves
75441 Paris Cedex 09 (FR)**

(56) Documents cités:
**GB-A- 2 551 682      US-A1- 2015 149 070
US-A1- 2016 057 335      US-A1- 2018 233 042**

**Description**

La présente invention concerne le domaine des systèmes d'assistance à la conduite de véhicules, par exemple des véhicules autonomes ou au moins en partie assistés, sur la base de capteurs disposés le long des voies de circulation des véhicules.

GB 2 551 682 A décrit un système de surveillance de trafic routier dans lequel un drone avec une caméra capture des images et les envoie à un centre d'analyse où elles sont analysées pour en extraire des informations (identification d'obstacles, conditions de circulation) ensuite transmises, par exemple à un véhicule qui peut alors modifier sa route sur la base de ces informations.

US 2018/233042 A1 décrit un système de partage d'informations de conditions routières dans lequel un serveur reçoit une requête d'information de conditions routières indiquant une position d'intérêt en provenance d'un premier terminal disposé dans un véhicule ; le système détermine alors un second terminal positionné à une distance maximale de ladite position d'intérêt et requiert un partage de conditions routières auprès du second terminal.

Il existe un besoin d'obtenir dans un tel système des informations pertinentes quant à la conduite des véhicules tout en limitant la bande passante nécessaire à l'obtention de ces informations.

A cet effet, suivant un premier aspect, l'invention propose un procédé d'assistance à la conduite de véhicules, selon la revendication 1.

L'invention permet ainsi de fournir, en temps réel, des informations spécifiques correspondant au besoin ponctuel d'un véhicule sur la base d'un ensemble de capteur(s) dont la configuration est adaptée en fonction du besoin courant. Le besoin est ainsi rempli tout en limitant le volume de données transmis.

Dans des modes de réalisation, le procédé d'assistance à la conduite de véhicules est selon l'une des revendications 2 à 5.

Suivant un deuxième aspect, la présente invention propose un système d'assistance à la conduite de véhicules circulant sur une route, selon l'une des revendications 7 à 9.

Suivant un troisième aspect, la présente invention propose un programme d'ordinateur selon la revendication 6.

Ces caractéristiques et avantages de l'invention apparaîtront à la lecture de la description qui va suivre, donnée uniquement à titre d'exemple, et faite en référence aux dessins annexés, sur lesquels :

- la figure 1 représente une vue d'un système d'assistance à la conduite de véhicules autonomes dans un mode de réalisation de l'invention ;
- la figure 2 est un organigramme d'étapes mises en oeuvre dans un mode de réalisation de l'invention.

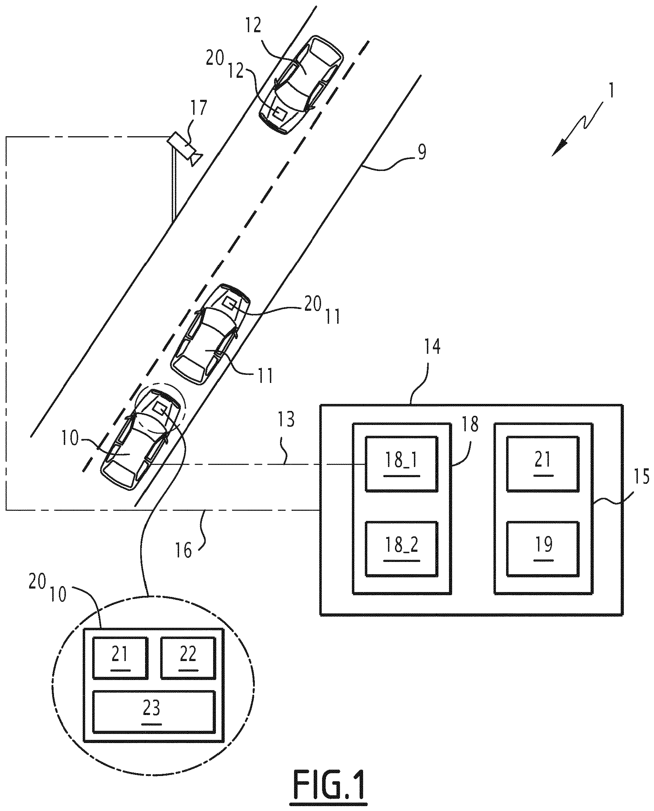

La figure 1 représente un système 1 d'assistance à la conduite de véhicules autonomes, comprenant par exemple les véhicules 10, 11, 12.

Le système d'assistance 1 comprend une unité de traitement 14 et un ensemble de capteur(s) 17.

L'ensemble de capteur(s) 17 dans le cas considéré comprend un capteur, installé le long d'une route 9.

Le capteur est par exemple une caméra vidéo 17 adaptée pour capturer des données d'image de la portion de route 9 située dans la zone d'acquisition de la caméra vidéo.

La caméra vidéo 17 est par exemple dotée de moteur(s) permettant de modifier ses angles d'inclinaison (en anglais « tilt ») et de panoramique (en anglais « pan »), ce qui modifie en conséquence sa zone d'acquisition.

La caméra vidéo 17 comporte en outre un sous-module de télécommunication filaire adapté pour établir des télécommunications par exemple selon le protocole Ethernet sur une liaison filaire la reliant à l'unité de traitement 14.

L'unité de traitement 14 comprend un bloc de contrôle 15 et un bloc de télécommunication 18.

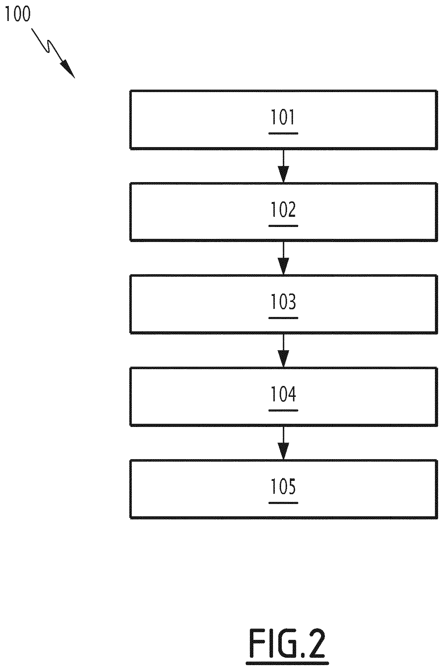

Le bloc de contrôle 15 comprend une mémoire 21 et un microprocesseur 19. Dans le mode de réalisation considéré, la mémoire 21 stocke des instructions logicielles qui, lorsqu'elles sont exécutées sur le microprocesseur 19, mettent en oeuvre les étapes incombant au bloc de contrôle 15 décrites ci-dessous en référence à la figure 2.

Le bloc de télécommunication 18 comprend par exemple un sous-bloc de télécommunication sans fil 18_1 et un sous-bloc de télécommunication filaire 18_2.

Le sous-bloc de télécommunication sans fil 18_1 est par exemple adapté pour établir des télécommunications sans fil, par exemple selon le protocole Wi-Fi, ou 4G ; il comprend par exemple un émetteur et un récepteur radiofréquence, ainsi qu'une antenne radiofréquence.

Le sous-bloc de télécommunication filaire 18_2 est adapté pour établir des télécommunications sur une liaison filaire 16 le reliant au capteur 17. Dans un autre mode de réalisation, le sous-bloc de télécommunication 18_2 est également adapté pour établir à la place des télécommunications sans fil.

Le protocole mis en oeuvre sur la liaison 16 est par exemple de type FireWire, Camera Link, GigE, Serial, CoaXPress, Ethernet, LDVS, CAN, Wi-Fi, radiofréquence etc.

Les véhicules 10, 11, 12 sont par exemple chacun équipé d'un dispositif de pilotage automatique embarqué, respectivement $20_{10}$, $20_{11}$, $20_{12}$.

Le dispositif de pilotage automatique $20_{10}$ embarqué dans le véhicule 10, similaire aux dispositifs de pilotage automatique embarqués $20_{11}$, $20_{12}$, comme représenté en zoom en figure 1, comprend un module de géolocalisation 21, par exemple de type GPS, adapté pour déterminer la localisation du véhicule, un module de télécommunication sans fil 22 adapté pour établir une télécommunication avec le sous-bloc de télécommunication sans fil 18_1 de l'unité de traitement 14, un module électronique de conduite autonome 23 et un ou des capteurs embarqués par exemple de type caméras (non représentés).

Dans le mode de réalisation considéré, le module de conduite 23 est adapté pour déterminer des instructions de pilotage commandant le moteur du véhicule 10 et la direction du véhicule 10, en fonction notamment de la position courante du véhicule 10 déterminée par le module de géolocalisation 21, des données capturées par les capteurs embarqués et d'une destination prédéterminée du véhicule 10.

Dans le mode de réalisation considéré, le module de conduite 23 comprend une mémoire et un microprocesseur (non représentés), la mémoire stockant des instructions logicielles qui, lorsqu'elles sont exécutées sur le microprocesseur, mettent en oeuvre les étapes incombant au module de conduite 23 décrites ci-dessous en référence à la figure 2.

La figure 2 indique les étapes d'un ensemble 100 d'opérations mis en oeuvre dans un mode de réalisation de l'invention.

Dans une étape 101, le module de conduite 23 du véhicule 10 détermine, lors d'une opération de calcul d'une prochaine instruction de pilotage, que des informations complémentaires quant à la situation courante sont nécessaires pour déterminer une telle instruction, qui ne peuvent lui être données par les capteurs embarqués.

Par exemple, le module de conduite 23 a identifié qu'un obstacle, ici le véhicule 11 à l'arrêt, obstrue sa voie de circulation sur la route 9 l'empêchant de poursuivre sur cette voie, et détermine que pour dépasser l'obstacle , le module de conduite 23 doit recevoir des informations sur l'état courant d'occupation de la voie en sens inverse sur la route 9, que les données fournies par les capteurs embarqués par le véhicule 10 et en partie au moins rendus aveugles par la proximité du véhicule 11, ne permettent pas de caractériser suffisamment.

Le module de conduite 23 génère alors une requête qui indique que des informations sont requises quant au statut d'une certaine zone d'intérêt, (ici quant à la circulation sur) la voie de la route 9 concernant le sens de circulation opposé au véhicule 10 (la voie à gauche de la figure 1, celle où circule la voiture 12), et ce, à partir de sa position correspondante telle qu'indiquée par le module de géolocalisation 21 et dans un segment de longueur déterminée (par exemple 200 mètres) dans le sens de la direction du véhicule 10 (cette zone ainsi définie correspond dans ce cas à ladite zone d'intérêt).

Puis cette requête ainsi générée est transmise, via le module de télécommunication sans fil 22 à l'unité de traitement 14.

Dans une étape 102, le sous-bloc de télécommunication sans fil 18_1 de l'unité de traitement 14 reçoit cette requête et la délivre au bloc de contrôle 15 de l'unité de traitement 14.

Le bloc de contrôle 15 de l'unité de traitement 14 détermine alors, en fonction de la position de la caméra 17, de l'ensemble des valeurs d'inclinaison et de panoramique atteignables par la caméra 17 et de la zone d'intérêt indiquée, que cette dernière est adaptée pour fournir des données représentatives de la zone d'intérêt indiquée dans la requête et détermine en outre des valeurs d'angles d'inclinaison et de panoramique de la caméra 17 permettant d'obtenir ces données. Puis le bloc de contrôle 15 transmet, via le sous-bloc de télécommunication filaire 18_2 une commande de réglage de la caméra indiquant ces valeurs d'angles d'inclinaison et de panoramique.

Dans une étape 103, la caméra 17 reçoit cette commande, en extrait les valeurs indiquées et modifie en temps réel sa configuration conformément aux valeurs indiquées, par actionnement du moteur. Après la modification de la configuration de la caméra, elle envoie un message de confirmation à l'unité de traitement 14 confirmant la bonne mise en oeuvre de la modification (ou l'infirmant le cas échéant).

Puis la caméra 17 capture les données d'images correspondantes et les transmet en temps réel, via son sous-module de télécommunication filaire, à l'unité de traitement 14.

Dans une étape 104, l'unité de traitement 14 reçoit, via son sous-bloc de télécommunication filaire 18_2, lesdites données acquises par la caméra 17. Dans des modes de réalisation, le bloc de contrôle 15 effectue une opération de traitement des données (extraction des seules données utiles au vu de la requête, identification et/ou classification, et/ou pistage et/ou localisation d'objets tels que véhicules, piétons, vélos etc. circulant sur la zone d'intérêt, par exemple, la présence du véhicule 12 est détectée). On notera que ces traitements dans un autre mode de réalisation sont réalisés en totalité ou en partie, en amont par le capteur 17.

Puis le bloc de contrôle 15 détermine, en fonction de ces données le cas échéant traitées, les informations, dites ci-après informations complémentaires, à fournir en réponse à la requête reçue à l'étape 102, et les transmet, via son sous-bloc de télécommunication sans fil 18_1, sur une liaison sans fil 13 au dispositif de pilotage automatique $20_{10}$.

Dans une étape 105, le dispositif de pilotage automatique $20_{10}$ reçoit ces informations complémentaires et détermine une instruction de pilotage du véhicule en fonction en outre de ces informations complémentaires. Par exemple, il détermine que la localisation, telle qu'indiquée dans les informations complémentaires reçues, du véhicule 12 circulant sur la zone d'intérêt est trop proche pour permettre un dépassement immédiat du véhicule 11 et détermine un temps d'arrêt nécessaire en fonction des informations reçues à l'issue duquel il déclenchera un dépassement du véhicule 11.

On notera que selon l'invention, outre l'orientation de la caméra 17, d'autres paramètres de configuration de la caméra 17 peuvent être déterminés par le bloc de contrôle 15, par exemple le facteur de zoom de la caméra, des filtres...

On notera que selon l'invention, outre l'orientation de la caméra 17, d'autres paramètres de configuration de la caméra 17 peuvent être exigés par le module de conduite 23

Le changement de configuration peut être mis en oeuvre par le capteur de manière matérielle ou logicielle.

Dans un exemple où une caméra multi-résolution 17 est utilisée, les paramètres de configuration modifiables selon l'invention peuvent définir une portion de l'image acquise avec une résolution plus élevée que le reste de l'image, ainsi que les niveaux de résolution.

Similairement pour tout type de capteur, le traitement peut n'être appliqué que dans une zone restreinte d'intérêt délimitée au sein de la zone d'acquisition : par exemple, un système de perception avec plusieurs capteurs LIDAR doit traiter beaucoup de points qui vient de chaque capteur donc le traitement est effectué en basse résolution en global (i.e. on n'utilise pas toutes les points, un échantillonnage est effectué) et le traitement est effectué en haute résolution seulement dans la zone restreinte d'intérêt.

Ainsi les ressources de calcul nécessaires sont réduites.

Le spectre de la caméra est selon les cas dans le domaine du visible et/ou celui de l'infra-rouge...

Dans d'autres modes de réalisation, l'ensemble de capteur(s) 17 comprend un autre type de capteur à la place de la caméra ou bien plusieurs capteurs, dont optionnellement une caméra. De tels capteurs sont, suivant les cas, par exemple adaptés pour détecter, classer, pister certains types d'objets (véhicules, vélos, piétons, pluie, obstacles, animaux ...) et/ou de caractéristiques d'objets (localisation, vitesse, distance à un point donné, taille, classe ...). Et l'unité de traitement 14 détermine selon l'invention les paramètres de configuration des capteurs en fonction de la requête reçue.

Par exemple, un capteur est de type LIDAR, LEDDAR, RADAR.

Des capteurs sont, suivant les modes de réalisation, adaptés pour effectuer un prétraitement, antérieur à l'acquisition, une détection d'objet, d'une estimation de taille d'objet, une classification d'objets, une localisation d'objet, une estimation de vitesse et/ou d'accélération d'objet, un pistage d'objet, une commande de moteur, outre la mise en oeuvre de télécommunications sans fil à destination de l'unité de traitement 14. On notera que certaines au moins de ces fonctions peuvent alternativement être réalisées dans l'unité de traitement 14.

Dans un mode de réalisation, les capteurs sont disposés de manière à surveiller notamment des zones à risque telles que des intersections de route, des ronds-points, des passages piétons etc.

Dans l'exemple d'étape 101 ci-dessus, la requête d'informations complémentaires auprès de l'unité de traitement 14 par le module de conduite 23 a été déclenchée suite à un besoin identifié de dépassement.

Une telle requête peut être déclenchée dans d'autres situations, par exemple et à titre non limitatif, par le module de conduite 23 notamment :

- à l'approche d'une intersection ou d'un rond-point - > pour focaliser le traitement autour du trajet du véhicule,
- en cas d'occultation des régions importantes de type passage piéton : si le système embarqué détecte qu'une certaine portion d'une région importante est occulté, il peut demander des informations supplémentaires ;
- à l'approche d'une station de bus ou de tramway, pour savoir s'il y a des passagers potentiels à embarquer.

Dans un mode de réalisation, des requêtes similaires à celle décrite dans l'étape 101 sont élaborées et envoyées par un module électronique (non représenté) de supervision de la flotte des véhicules, en charge de surveiller à distance la circulation des véhicules 10-12, de les piloter de manière permanente (dans ce cas, il peut ne pas y avoir de communication entre le dispositif de pilotage embarqué et l'unité de traitement 14) ou ponctuelle, par exemple seulement quand le module électronique de supervision détecte une situation sensible et prend alors la main sur la conduite d'un véhicule ou de plusieurs véhicules.

Dans un autre mode de réalisation, à l'étape 101, la requête d'informations complémentaires est envoyée par le module de conduite 23 à l'unité de traitement 14, et avant que l'unité de traitement 14 ne transmette une commande de réglage de paramètres de configuration au capteur, l'unité de traitement 14 requiert une demande d'accord auprès d'un module électronique de supervision, en accompagnant cette demande d'accord de la requête d'informations complémentaires et/ou des paramètres de configuration de capteur(s) déterminés. Et l'unité de traitement 14 ne transmet la commande de réglage de configuration au(x) capteur(s) que si un accord a été fourni en réponse par le module de supervision.

Le module de supervision comprend alors l'équivalent des modules de conduite 23 des véhicules et est de même par exemple réalisé sous la forme d'une mémoire stockant des instructions logicielles et d'un microprocesseur.

Le module de supervision comprend un bloc de télécommunication adapté pour mettre en oeuvre des communications sans fil avec les véhicules pour leur communiquer les instructions de pilotage, recevoir éventuellement des données de leur part telles que leur position, leur destination, les données acquises par les capteurs embarqués, et pour mettre en oeuvre des communications sans fil ou filaires avec l'unité de traitement 14 afin de transmettre les requêtes et de recevoir les informations complémentaires en retour.

Ainsi, le module de supervision peut orchestrer entre eux les déplacements des différents véhicules, en fonction des informations complémentaires fournies par l'unité de traitement, lorsque le déplacement d'un des véhicules impacte le déplacement d'un autre desdits véhicules. Par exemple, dans la situation représentée en figure 1, le module de supervision peut faire stopper le véhicule 12, puis faire dépasser le véhicule 11 par le véhicule 10, ou commander toute autre séquence d'actions aux véhicules, en fonction des données communiquées par les véhicules, des informations complémentaires reçues, et de paramètres divers tels qu'un indice de priorité relative affecté à chaque véhicule, permettant de prioriser entre eux leur circulation respective.

Les déplacements sont ainsi optimisés de façon globale et la sécurité de circulation est accrue.

Dans un mode de réalisation, un tel module de supervision échange avec plusieurs unités de traitement similaires à l'unité de traitement 14 et distribuées à des endroits distincts.

La présente invention propose ainsi un système de perception actif, permettant d'enrichir la perception de l'environnement des véhicules en fournissant en temps réel des informations pertinentes, répondant aux besoins courants d'informations telles qu'ils ont été expressément signifiés et qui sont nécessaires pour que des décisions de conduite pertinentes soient prises.

La zone d'intérêt peut être représentée, suivant les modes de réalisation, par un seul point, une collection de points, un polygone ou un polyèdre dans un référentiel de coordonnées prédéfini, qui est connu du dispositif qui requiert et de l'unité de traitement.

Dans un mode de réalisation, à l'étape 102, le bloc de contrôle 15 effectue les changements de référentiel pour traduire la zone d'intérêt dans le référentiel propre à chaque capteur, par exemple en calculant : $R^S = H_A^S R^A$ , où $R^S$ sont les coordonnées de la zone d'intérêt exprimée dans le référentiel d'un capteur, $R^A$ sont les coordonnées de la zone d'intérêt exprimée dans le référentiel prédéfini utilisé pour les échanges entre le module de conduite (ou le module de supervision) et l'unité de traitement 14 et $H_A^S$ est la matrice de transformation entre les deux référentiels. Si le référentiel prédéfini est un référentiel dynamique, par exemple le référentiel du véhicule, la transformation est calculée automatiquement par le bloc de contrôle 15 en fonction des données dans la requête (notamment localisation et orientation du véhicule).

On notera qu'à l'étape 104, outre les informations complémentaires indiquant par exemple des objets détectés, l'unité de traitement 14 fournit en outre au dispositif de pilotage automatique $20_{10}$ par exemple les coordonnées de chaque objet (et le cas échéant les éléments nécessaires à leur traduction dans le référentiel utilisé par le dispositif de pilotage ou alors il effectue la transformation de changement de référentiel avant transmission).

Dans un mode de réalisation, l'étape 102 comprend une opération d'optimisation pour déterminer la configuration de capteur qui maximise le recouvrement entre la zone d'intérêt et le champ de vue du capteur soit la configuration c du capteur s qui maximise $f(R^S, F_c^S)$ :

où $F_c^S$ est le champ de vue du capteur s pour sa configuration c et f, telle que 0 < f < 1, est une fonction de similarité qui évalue une similarité entre ses deux variables d'entrée, ici $R^s$ et $F_c^S$ .

Comme la zone d'intérêt, le champ de vue peut être représenté comme un point ou une collection de points défini(s) dans un espace de dimension 2D, respectivement 3D formant un polygone, respectivement un polyèdre.

$d^s$ est le score du processus d'optimisation : $d^S = \max_c f(R^S, F_c^S)$ .

Dans un mode de réalisation, la zone d'intérêt peut couvrir une zone large couverte par plus d'un capteur de l'ensemble de capteur(s). Dans ce cas, on effectue l'optimisation multi-variable suivante pour déterminer la configuration de chaque capteur :

$$d^E = \max_{c_1,...c_N} \left( \sum_{i=1}^{N} f\left(R^{s_i}, F_{c_i}^{s_i}\right) + \sum_{j=1}^{N} \sum_{i=j+1}^{N} \left(1 - f\left(F_{c_i}^{s_i}, F_{c_j}^{s_j}\right)\right) \right)$$

où E = {$s_1$, $s_2$, ...$s_N$} l'ensemble de capteurs, $c_i$ : configuration pour le capteur $s_i$, N : nombre total de capteurs.

Le premier terme dans la parenthèse permet de maximiser le recouvrement du champ de vue de chaque capteur avec la zone d'intérêt tandis que le second terme minimise le recouvrement entre les champs de vue individuels des capteurs. Ceci permet d'éviter à des capteurs individuels de surveiller la même aire et de couvrir au maximum la zone d'intérêt.

La configuration d'un capteur peut correspondre à un état matériel, par exemple inclinaison, panoramique et/ou zoom, et/ou à un état logiciel commandé par au moins un paramètre, par exemple l'échantillonnage d'une portion à un haut niveau de résolution.

La fonction de similarité $f(x, y)$ peut correspondre à une opération basique de calcul d'intersection (i.e. le ratio de la zone de recouvrement sur la zone d'intérêt ou le champ de vue). Ainsi la fonction interprète la zone d'intérêt et le champ de vue comme davantage similaires à mesure que leur recouvrement augmente. Alternativement, la fonction implémente le calcul de l'indice Jaccard entre ses variables d'entrée (Jaccard, P. (1912), « The distribution of the flora in the alpine zone". 1. New phytologist, 11(2), 37-50). Dans ce dernier cas, la disproportion engendrée par des différences de taille entre les entrées $x, y$ peut être compensée. D'autres méthodes de calcul du ratio de l'intersection peuvent être utilisées pour la fonction $f(x, y)$.

Une fois l'optimisation effectuée à l'étape 102 (par exemple fixant une orientation respective pour chaque capteur, exemple {capteur $s_1$ orienté à 90 degrés, capteur $s_2$ orienté à 85 degrés etc.} , une fonction de décision $g()$ peut être utilisée pour déterminer les capteurs d'intérêt.

Par exemple, la fonction de décision $g$ peut être une fonction de score de similarité du capteur $g(z_{c^*}^{s_i})$ où

$$g\left(z_{c^*}^{s_i}\right) = f\left(R^{s_i}, F_{c^*}^{s_i}\right)$$

, $c^*$ étant la configuration optimale. La fonction implémente une opération de seuillage où seuls les capteurs dont le score dépasse un certain seuil sont sélectionnés par l'unité de traitement 14 pour collecter les données sur la zone d'intérêt pour répondre à la requête. D'autres fonctions de décision peuvent être utilisées. Et à l'étape 103, des commandes sont envoyées par l'unité de traitement 14 à chaque capteur ainsi sélectionné leur commandant d'acquérir des données avec leur configuration optimale déterminée selon le processus d'optimisation.

Dans un mode de réalisation, à l'étape 101, le module de conduite 23 (ou le module de supervision) indique un type d'informations complémentaires requises : par exemple une ou des classes spécifiques d'objets dans une certaine zone d'intérêt (ou des objets n'appartenant pas à une classe spécifiée) et/ou des objets se déplaçant dans une direction spécifiée (par exemple vers l'est) dans une certaine zone d'intérêt et/ou des objets avec une valeur de vitesse comprise dans une plage spécifiée ... De telles requêtes peuvent donner lieu à des commandes à l'étape 102 d'adapter leur configuration en termes de modèle de détection ou de classification, éventuellement sans changement de champ de vue (i.e. notamment sans utilisation de moteur).

Dans un mode de réalisation, le module de conduite 23 et/ou le module de supervision et/ou le bloc de contrôle 15 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit)*.

## Revendications

1. Procédé d'assistance à la conduite de véhicules (10, 11, 12) comprenant les étapes suivantes mises en oeuvre par un système électronique (1) d'assistance à la conduite de véhicules circulant sur une route (9) comprenant un ensemble de capteur(s) (17) installé(s) le long de sections de la route et une unité électronique de traitement (14) :

   réception par l'unité de traitement d'une requête, en provenance d'un dispositif électronique (23), indiquant une portion de route et requérant des informations relatives à l'état de ladite portion de route ;
   détermination par l'unité de traitement (14), en fonction desdites informations requises et de ladite portion de route, de la configuration parmi plusieurs configurations déterminées, d'au moins un capteur (17) de l'ensemble de capteur(s) ;
   transmission par l'unité de traitement (14) à destination dudit capteur (17) d'une commande indiquant ladite configuration ;
   sur réception de ladite commande, mise en oeuvre, par ledit capteur (17), de ladite configuration de capteur commandée et transmission par le capteur à l'unité de traitement (14) de données délivrées par ledit capteur dans ladite configuration ;
   réception desdites données par l'unité de traitement (14), détermination des informations requises en réponse à la requête en fonction desdites données et transmission par l'unité de traitement desdites informations au dispositif électronique (23),
   ledit procédé étant **caractérisé en ce qu'**il comprend :
   la configuration d'un capteur de l'ensemble de capteurs étant déterminée par la mise en oeuvre d'une fonction d'optimisation automatique visant à :

   maximiser le recouvrement du champ de vue du capteur avec la portion de route et/ou
   minimiser le recouvrement entre les champs de vue des capteurs.

**2.** Procédé d'assistance à la conduite de véhicules (10,11,12) selon la revendication 1, comprenant les étapes suivantes mises en oeuvre par ledit dispositif électronique (23), dans le cadre de la détermination d'une instruction de conduite d'un véhicule :

identification d'un manque d'informations relatives à l'état de ladite portion de route (9) ;
suite à ladite identification, génération de ladite requête indiquant ladite portion de route et lesdites informations requises relatives à l'état de ladite portion de route et transmission de ladite requête à l'unité de traitement (14) ;
réception desdites informations ultérieurement transmises par l'unité de traitement en réponse à ladite requête et détermination d'une instruction de conduite d'un véhicule en fonction desdites informations.

**3.** Procédé d'assistance à la conduite de véhicules selon la revendication 1 ou 2, selon lequel le dispositif électronique est embarqué dans un desdits véhicules ou pilote à distance une flotte de véhicules dont ledit véhicule.

**4.** Procédé d'assistance à la conduite de véhicules selon la revendication 3, selon lequel le dispositif électronique pilote à distance une flotte de véhicules et orchestre entre eux les déplacements relatifs desdits véhicules en fonction desdites informations.

**5.** Procédé d'assistance à la conduite de véhicules selon l'une quelconque des revendications précédentes, selon lequel suite à la réception de la requête et avant transmission de la commande, l'unité de traitement envoie à un dispositif électronique de supervision une demande d'autorisation indiquant les éléments de la requête et ne transmet la commande à destination du capteur qu'après avoir reçu une autorisation dudit dispositif électronique de supervision en réponse à sa demande d'autorisation.

**6.** Programme d'ordinateur comportant des instructions logicielles qui, lorsqu'elles sont exécutées par un ordinateur, mettent en oeuvre les étapes incombant à l'unité de traitement d'un procédé selon l'une quelconque des revendications précédentes.

**7.** Système d'assistance à la conduite de véhicules circulant sur une route (9), ledit système comprenant un ensemble de capteur(s) (17) installé(s) le long de sections de la route et une unité électronique de traitement (14) adaptée pour recevoir une requête, en provenance d'un dispositif électronique (23), indiquant une portion de route et requérant des informations relatives à l'état de ladite portion de route, pour déterminer, en fonction desdites informations requises et de ladite portion de route, la configuration parmi plusieurs configurations déterminées, d'au moins un capteur (17) de l'ensemble de capteur(s), pour transmettre) à destination dudit capteur (17) une commande indiquant ladite configuration ;

ledit capteur étant adapté pour, sur réception de ladite commande, mettre en oeuvre ladite configuration de capteur commandée, capturer des données dans ladite configuration et transmettre à l'unité de traitement (14) lesdites données ;
l'unité de traitement (14) étant adaptée pour recevoir lesdites données, pour déterminer des informations requises en réponse à la requête en fonction desdites données et pour transmettre lesdites informations au dispositif électronique (23),
la configuration d'un capteur de l'ensemble de capteurs étant déterminée par la mise en oeuvre d'une fonction d'optimisation automatique visant à :

maximiser le recouvrement du champ de vue du capteur avec la portion de route et/ou
minimiser le recouvrement entre les champs de vue des capteurs.

**8.** Système d'assistance à la conduite de véhicules selon la revendication 7, comprenant ledit dispositif électronique (23), qui est adapté pour, dans le cadre de la détermination d'une instruction de conduite d'un véhicule, identifier un manque d'informations relatives à l'état de ladite portion de route (9), pour, suite à ladite identification, générer ladite requête indiquant ladite portion de route et lesdites informations requises relatives à l'état de ladite portion de route et pour transmettre ladite requête à l'unité de traitement (14) et pour recevoir lesdites informations ultérieurement transmises par l'unité de traitement en réponse à ladite requête et déterminer une instruction de conduite d'un véhicule en fonction desdites informations.

**9.** Système d'assistance à la conduite de véhicules selon la revendication 8, dans lequel le dispositif électronique est embarqué dans un desdits véhicules ou pilote à distance une flotte de véhicules dont ledit véhicule.

**Patentansprüche**

1. Verfahren zur Unterstützung des Fahrens von Fahrzeugen (10, 11, 12), umfassend die folgenden Schritte, die von einem elektronischen System (1) zur Unterstützung des Fahrens von Fahrzeugen durchgeführt werden, die auf einer Straße (9) fahren, umfassend eine Anordnung von Sensor(en) (17), die entlang von Abschnitten der Straße installiert sind, und eine elektronische Verarbeitungseinheit (14):

   Empfangen, durch die Verarbeitungseinheit, einer Anfrage, die von einer elektronischen Vorrichtung (23) stammt, die einen Straßenabschnitt angibt und Informationen über den Zustand des Straßenabschnitts anfordert;
   Bestimmen, durch die Verarbeitungseinheit (14) abhängig von den erforderlichen Informationen und dem Straßenabschnitt, der Konfiguration von mehreren bestimmten Konfigurationen, mindestens eines Sensors (17) der Anordnung von Sensor(en);
   Übertragen, durch die Verarbeitungseinheit (14), eines Befehls an den Sensor (17), der die Konfiguration angibt;
   bei Empfang des Befehls Durchführen, durch den Sensor (17), der befohlene Sensorkonfiguration und Übertragen, durch den Sensor an die Verarbeitungseinheit (14), von Daten, die von dem Sensor in dieser Konfiguration bereitgestellt werden;
   Empfangen der Daten durch die Verarbeitungseinheit (14), Bestimmen von erforderlichen Informationen als Reaktion auf die Anfrage abhängig von den Daten und Übertragen, durch die Verarbeitungseinheit, der Informationen an die elektronische Vorrichtung (23), wobei das Verfahren **dadurch gekennzeichnet ist, dass** es Folgendes umfasst:
   wobei die Konfiguration eines Sensors der Anordnung von Sensoren durch das Durchführen einer automatischen Optimierungsfunktion bestimmt wird, die auf Folgendes abzielt:

      Maximieren der Überlappung des Sichtfelds des Sensors mit dem Straßenabschnitt, und/oder
      Minimieren der Überlappung zwischen den Sichtfeldern der Sensoren.

2. Verfahren zur Unterstützung des Fahrens von Fahrzeugen (10, 11, 12) nach Anspruch 1, umfassend die folgenden Schritte, die von der elektronischen Vorrichtung (23) im Rahmen der Bestimmung einer Anweisung zum Fahren eines Fahrzeugs durchgeführt werden:

   Identifizieren eines Mangels an Informationen über den Zustand des genannten Straßenabschnitts (9);
   nach dem Identifizieren, Erzeugen der Anfrage, die den Straßenabschnitt und die erforderlichen Informationen über den Zustand des Straßenabschnitts angibt, und Übertragen der Anfrage an die Verarbeitungseinheit (14);
   Empfangen der Informationen, die später von der Verarbeitungseinheit als Antwort auf die genannte Anfrage übertragen werden, und Bestimmen einer Anweisung zum Führen eines Fahrzeugs abhängig von den Informationen.

3. Verfahren zur Unterstützung des Fahrens von Fahrzeugen nach Anspruch 1 oder 2, wobei die elektronische Vorrichtung an Bord eines der Fahrzeuge ist oder eine Flotte von Fahrzeugen, darunter das Fahrzeug, fernsteuert.

4. Verfahren zur Unterstützung des Fahrens von Fahrzeugen nach Anspruch 3, wobei die elektronische Vorrichtung eine Flotte von Fahrzeugen fernsteuert und die relativen Bewegungen der Fahrzeuge untereinander abhängig von den Informationen orchestriert.

5. Verfahren zur Unterstützung des Fahrens von Fahrzeugen nach einem der vorherigen Ansprüche, wobei die Verarbeitungseinheit nach Empfang der Anfrage und vor Übertragung des Befehls eine Autorisierungsanfrage an eine elektronische Überwachungsvorrichtung sendet, die die Elemente der Anfrage angibt, und den Befehl an den Sensor erst nach Empfang einer Autorisierung von der elektronischen Überwachungsvorrichtung als Antwort auf ihre Autorisierungsanfrage überträgt.

6. Computerprogramm, umfassend Softwareanweisungen, die, wenn sie von einem Computer ausgeführt werden, die Schritte durchführen, die der Verarbeitungseinheit eines Verfahrens nach einem der vorherigen Ansprüche obliegen.

7. System zur Unterstützung des Fahrens von Fahrzeugen, die auf einer Straße (9) fahren, das System umfassend eine Anordnung von Sensor(en) (17), die entlang von Abschnitten der Straße installiert sind, und eine elektronische Verarbeitungseinheit (14), die angepasst ist, um eine Anfrage zu empfangen, die von einer elektronischen Vorrichtung (23) stammt, die einen Straßenabschnitt angibt und Informationen über den Zustand des Straßenabschnitts anfordert, um abhängig von den angeforderten Informationen und dem Straßenabschnitt die Konfiguration von mehreren bestimmten Konfigurationen von mindestens einem Sensor (17) der Anordnung von Sensor(en) zu bestimmen, um einen Befehl an den Sensor (17) zu übertragen, der die Konfiguration angibt;

wobei der Sensor angepasst ist, um bei Empfang des Befehls die befohlene Sensorkonfiguration zu implementieren, Daten in der Konfiguration zu erfassen und die Daten an die Verarbeitungseinheit (14) zu übertragen; wobei die Verarbeitungseinheit (14) angepasst ist, um die Daten zu empfangen, als Reaktion auf die Anfrage angeforderte Informationen abhängig von den Daten zu bestimmen und die Informationen an die elektronische Vorrichtung (23) zu übertragen, wobei die Konfiguration eines Sensors der Anordnung von Sensoren durch das Durchführen einer automatischen Optimierungsfunktion bestimmt wird, die auf Folgendes abzielt:

Maximieren der Überlappung des Sichtfelds des Sensors mit dem Straßenabschnitt, und/oder Minimieren der Überlappung zwischen den Sichtfeldern der Sensoren.

**8.** System zur Unterstützung des Fahrens von Fahrzeugen nach Anspruch 7, umfassend die elektronische Vorrichtung (23), die angepasst ist, um im Rahmen der Bestimmung einer Fahranweisung eines Fahrzeugs einen Mangel an Informationen in Bezug auf den Zustand des Straßenabschnitts (9) zu identifizieren, um nach der Identifikation die Anfrage zu erzeugen, die den Straßenabschnitt und die erforderlichen Informationen über den Zustand des Straßenabschnitts angibt, und um die Anfrage an die Verarbeitungseinheit (14) zu übertragen und um die Informationen zu empfangen, die anschließend von der Verarbeitungseinheit als Reaktion auf die Anfrage übertragen werden, und um eine Fahranweisung für ein Fahrzeug abhängig von den Informationen zu bestimmen.

**9.** System zur Unterstützung des Fahrens von Fahrzeugen nach Anspruch 8, wobei die elektronische Vorrichtung an Bord eines der Fahrzeuge ist oder eine Flotte von Fahrzeugen, darunter das Fahrzeug, fernsteuert.


**Claims**

**1.** A method for assisting with the driving of vehicles (10, 11, 12) comprising the following steps carried out by an electronic system (1) for assisting with the driving of vehicles traveling on a road (9) including a set of sensor(s) (17) installed along sections of the road and an electronic processing unit (14):

reception by the processing unit of a request, coming from an electronic device (23), indicating a road portion and requesting information relative to the state of said road portion; determination by the processing unit (14), as a function of said requested information and said road portion, of the configuration among several determined configurations, of at least one sensor (17) of the set of sensor(s); sending by the processing unit (14) to said sensor (17) of a command indicating said configuration; upon reception of said command, implementation, by said sensor (17), of said commanded sensor configuration and sending, by the sensor to the processing unit (14), of data delivered by said sensor in said configuration; reception of said data by the processing unit (14), determination of the requested information in response to the request as a function of said data and sending by the processing unit of said information to the electronic device (23), said method being **characterized in that** it comprises: the configuration of a sensor of the set of sensors being determined by the implementation of an automatic optimization function seeking to:

maximize the overlap of the field of view of the sensor with the road portion and/or minimize the overlap between the fields of view of the sensors.

**2.** The method for assisting with the driving of vehicles (10, 11, 12) according to claim 1, comprising the following steps implemented by said electronic device (23), in the context of determining a driving instruction of a vehicle:

identification of a lack of information relative to the state of said road portion (9); following said identification, generation of said request indicating said road portion and said requested information relative to the state of said road portion, and sending of said request to the processing unit (14); reception of said information subsequently sent by the processing unit in response to said request and determination of a driving instruction of a vehicle as a function of said information.

**3.** The method for assisting with the driving of vehicles according to claim 1 or 2, wherein the electronic device is embedded in one of said vehicles or remotely controls a fleet of vehicles, including said vehicle.

**4.** The method for assisting with the driving of vehicles according to claim 3, wherein the electronic device remotely controls a fleet of vehicles and orchestrates the relative movements of said vehicles with respect to one another as a function of said information.

**5.** The method for assisting with the driving of vehicles according to any one of the preceding claims, wherein following the reception of the request and before sending the command, the processing unit sends an electronic supervision device an authorization request indicating the elements of the request and only sends the command to the sensor after having received an authorization from said electronic supervision device in response to its authorization request.

**6.** A computer program comprising software instructions which, when executed by a computer, carry out the steps of a method according to any one of the preceding claims for which the processing unit is responsible.

**7.** A system for assisting with the driving of vehicles traveling on a road (9), said system including a set of sensor(s) (17) installed along sections of the road and an electronic processing unit (14) adapted to receive a request, coming from an electronic device (23), indicating a road portion and requesting information relative to the state of said road portion, in order to determine, as a function of said requested information and said road portion, the configuration among several determined configurations, of at least one sensor (17) of the set of sensor(s), to send, to said sensor (17), a command indicating said configuration;

said sensor being adapted, upon reception of said command, to implement said commanded sensor configuration, to detect data in said configuration and to send said data to the processing unit (14);

the processing unit (14) being adapted to receive said data, to determine requested information in response to the request as a function of said data and to send said information to the electronic device (23),

the configuration of a sensor of the set of sensors being determined by the implementation of an automatic optimization function seeking to:

maximize the overlap of the field of view of the sensor with the road portion and/or
minimize the overlap between the fields of view of the sensors.

**8.** A system for assisting with the driving of vehicles according to claim 7, including said electronic device (23), which is suitable, in the context of determining a driving instruction of a vehicle, for identifying a lack of information relative to the state of said road portion (9), for, after said identification, generating said request indicating said road portion and said requested information relative to the state of said road portion and for sending said request to the processing unit (14) and for receiving said information later sent by the processing unit in response to said request and determining a driving instruction of a vehicle as a function of said information.

**9.** The system for assisting with the driving of vehicles according to claim 8, wherein the electronic device is embedded in one of said vehicles or remotely controls a fleet of vehicles, including said vehicle.

**FIG.1**

100

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2551682 A

- US 2018233042 A1

**Littérature non-brevet citée dans la description**

- **JACCARD, P.** The distribution of the flora in the alpine zone. *New phytologist,* 1912, vol. 11 (2), 37-50